# EUROPÄISCHE PATENTSCHRIFT

(11) **EP 0 441 225 B1**
(45) Veröffentlichungstag und Bekanntmachung des Hinweises auf die Patenterteilung: **11.01.1995**
(21) Anmeldenummer: 91101117.9
(22) Anmeldetag: 29.01.1991
(51) Int. Cl.: B61C 9/48, F16D 3/20

(54) **Antrieb für Schienenfahrzeuge**
Drive for rail-vehicles
Entraînement pour des véhicules sur rails

(30) Priorität: 03.02.1990 DE 4003165
(43) Veröffentlichungstag der Anmeldung: 14.08.1991
(73) Patentinhaber: THYSSEN INDUSTRIE AG, 45128 Essen (DE)
(72) Erfinder: Schad, Heinzfried, W-3500 Kassel (DE)
(74) Vertreter: Henfling, Fritz, Dipl.-Ing.

(56) Entgegenhaltungen:
- FR-A- 839 679
- US-A- 4 886 479

## Beschreibung

Die Erfindung betrifft einen Antrieb für Schienenfahrzeuge der im Oberbegriff des Patentanspruchs umrissenen Gattung. Ein solcher Antrieb ist beschrieben in der EP-A-0 132 236.

Bei durch die Spurweite vorgegebener Baubreite des Antriebes ist die Baulänge des Antriebsmotors begrenzt durch den Platzbedarf für das Radsatzgetriebe und die beiden die Verbindungswelle zwischen Motor und Radsatzgetriebe einerseits mit der Motorwelle und andererseits mit dem Radsatzgetriebe verbindenden Kupplungen. Bei solchen Antrieben erweist es sich dann auch als erforderlich, Relativbewegungen unter anderem in axialer Richtung zwischen dem fest am Fahrzeugrahmen angeordneten Motor und dem damit in Wirkverbindung stehenden, auf der am Rahmen federnd gelagerten Radsatzwelle angeordneten Radsatzgetriebe zu ermöglichen. Nach der EP-A-0 132 236 ist der Verbindungswelle hierfür getriebeseitig eine Bogenzahnkupplung zugeordnet, die mit einem in die Ebene des Großrades vorspringenden, am Gehäuse gelagerten Ansatz versehen ist, der in Zahneingriff mit dem auf der Radsatzwelle sitzenden Großrad steht. Diese Lösung benötigt Platz zu Lasten der Größe des Antriebsmotors. Der Reibungskoeffizient µ einer geschmierten Bogenzahnkupplung liegt bei 0,1 bis 0,15. Bei einer anderen, in der DE-A-10 68 293 beschriebenen Lösung, bei der Gelenkkupplungen nach Art des Kardangelenks verwendet werden, liegt das in besonderer Weise ausgestaltete, radsatzgetriebeseitige Gelenk platzsparend bereits in der Ebene des auf der Radsatzwelle sitzenden Großrades, aus der hierbei für den Längenausgleich vorgesehenen sogenannten Nutenverbindung zwischen dem Gelenk und dem Großrad resultiert allerdings mit 0,15 bis 0,2 ein noch größerer Reibungskoeffizient µ. Ein größerer Reibungswiderstand entsprechend einem größeren Reibungskoeffizienten beeinträchtigt die Einstellbeweglichkeit, insbesondere dann auch die geforderte Relativbeweglichkeit in axialer Richtung.

Ausgehend vom im vorausgehenden umrissenen Stand der Technik liegt der Erfindung die Aufgabe zugrunde, eine platzsparende Lösung mit verbesserter Einstellbeweglichkeit anzubieten.

Die Aufgabe wird erfindungsgemäß mit einem gattungsgemäßen Antrieb für Schienenfahrzeuge gelöst, der entsprechend dem kennzeichnenden Teil des Anspruchs ausgebildet ist.

Dabei wird zugunsten des Antriebsmotors an Baulänge bei der Verbindung des Antriebsmotors mit dem Radsatzgetriebe eingespart, der Antriebsmotor kann also optimal ausgelegt werden. Als weiterer Vorteil stellt sich bei dem neuen Antrieb die Reduzierung an der Verbindungswelle wirksam werdender wegeabhängiger und drehmomentabhängiger Rückstellkräfte ein, woraus bessere Laufeigenschaften des Radsatzes resultieren. Aus dem Tripode-Gelenk resultiert nämlich zusätzlich zur kardanischen Beweglichkeit eine nahezu reibungsfreie Beweglichkeit in axialer Richtung, also eine insgesamt verbesserte Einstellbeweglichkeit.

In der Zeichnung ist die Erfindung anhand eines Ausführungsbeispieles weitergehend erläutert. Es zeigen:
- Figur 1: die schematische Darstellung der neuen Getriebeanordnung an einem Fahrzeugrahmen,
- Figur 2: das radsatzgetriebeseitige Ende der Verbindungswelle mit dem Innenteil eines Tripode-Gelenks in schaubildlicher Darstellung,

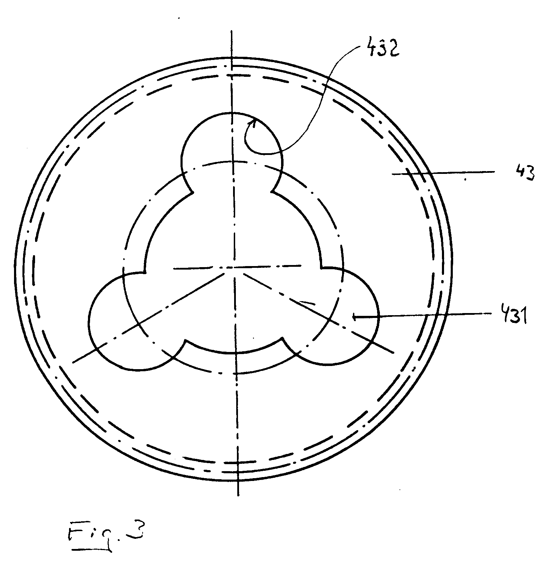

- Figur 3: das dem Innenteil des Tripode-Gelenks angepaßte Ritzel des Radsatzgetriebes in Stirnansicht.

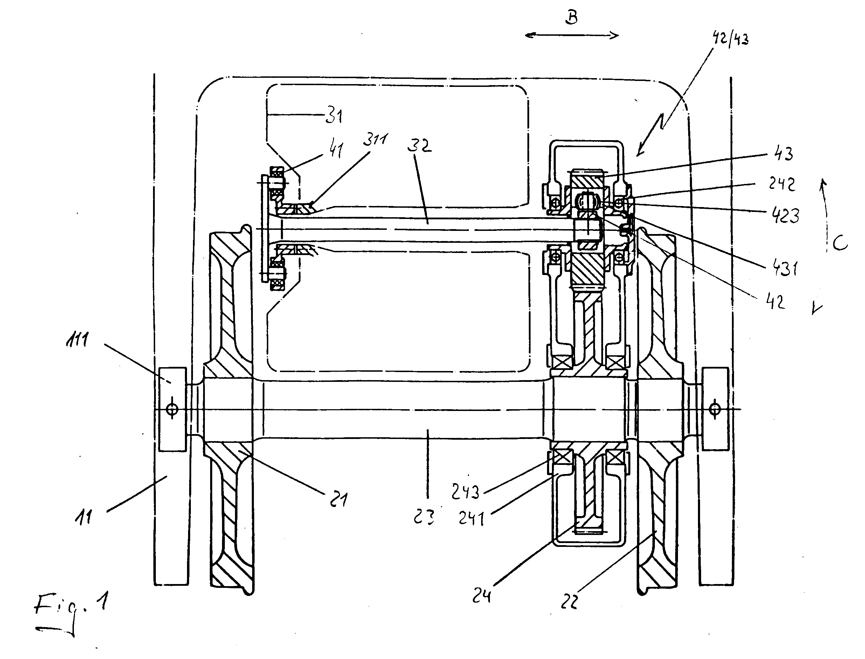

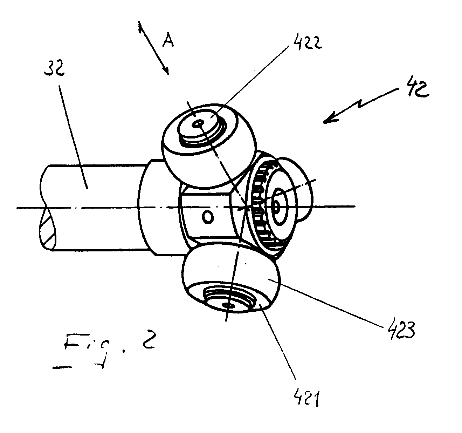

Dem mit 11 bezeichneten Fahrzeugrahmen ist der anzutreibende Radsatz zugeordnet, dessen Räder 21, 22 auf der am Rahmen 11 federnd gelagerten (111) Welle 23 angeordnet sind. Angetrieben wird der Radsatz durch den ebenfalls am Rahmen 11 gelagerten Hohlwellenmotor 31, durch dessen parallel zur Radsatzwelle 23 verlaufende Hohlwelle 311 sich die Verbindungswelle 32 zwischen dem Hohlwellenmotor 31 und dem Radsatzgetriebe erstreckt. Gebildet wird das Radsatzgetriebe von dem drehfest auf der Radsatzwelle 23 sitzenden Großrad 24 mit dem damit in Zahneingriff stehenden Ritzel 43. Das Ritzel 43 ist am Getriebegehäuse 241 drehbeweglich gelagert (242). Das seinerseits drehbeweglich am Großrad 24 gelagerte (243) Getriebegehäuse 241 stützt sich über eine nicht dargestellte Drehmomentstütze am Fahrzeugrahmen 11 ab. Auf der vom Radsatzgetriebe abgekehrten Seite ist die Verbindungswelle 32 mit der Hohlwelle 311 des Antriebsmotors 31 über eine elastische Kupplung 41 verbunden. Von der Verbindungswelle 32 wird das Drehmoment über ein Tripode-Gelenk in das auf der Radsatzwelle 23 sitzende Großrad 24 eingeleitet. Das Innenteil 42 des Tripode-Gelenks sitzt drehfest auf dem sich in das Getriebegehäuse 241 hinein erstreckenden Ende der Verbindungswelle 32, es bildet zusammen mit dem als mit dem auf der Radsatzwelle 23 sitzenden Großrad 24 kämmendes Ritzel ausgebildeten Außenteil 43 die getriebeseitige Kupplung. Die in das Radsatzgetriebe hinein verlagerte getriebeseitige Kupplung spart zugunsten des Antriebsmotors Raum ein, der Antriebsmotor kann somit größer und damit stärker ausgelegt werden. Die eine ballige Lauffläche 423 aufweisenden, sich in den Bohrungen 431 des das mit dem Großrad 24 kämmende Ritzel bildenden Außenteils 43 des Tripode-Gelenks führenden Rollen 421 des Innenteils 42 sind auf ihren Achsen 422 begrenzt verlagerbar (Doppelpfeil A in Fig. 2), sie sind dann auch in den Bohrungen 431 des Ritzels 43 im Sinne des Doppelpfeiles B in Fig. 1 für den geforderten Längenausgleich verlagerbar. Die Rollen 421 rollen leichtgängig an den Wandungen 432 der Bohrungen 431 ab, ihre Verlagerung in den Bohrungen 431 im Sinne des Doppelpfeiles B in Fig. 1 erfolgt also über eine Roll- bzw. Wälzbewegung. Entsprechendes gilt für Auslenkungen im Sinne des Doppelpfeiles C in Fig. 1 sowie senkrecht dazu. Bei einem Reibungskoeffizienten µ von 0,01 bis 0,02, ist die Einstellbeweglichkeit hierbei, wie gefordert, von Rückstellkräften nahezu unbeeinträchtigt.

## Patentansprüche

1. Antrieb für Schienenfahrzeuge mit am Fahrzeug- bzw. am Drehgestelirahmen (11) gelagertem elektrischem Hohlwellenmotor (31), durch dessen sich parallel zur am Rahmen (11) federnd gelagerten Radsatzwelle (23) verlaufender Hohlwelle (311) sich die Verbindungswelle (32) zwischen dem Antriebsmotor (31) und dem Radsatzgetriebe erstreckt, die am vom Radsatzgetriebe abgekehrten Ende über eine elastische Kupplung (41) mit der Motorwelle (311) verbunden ist und mit dem Radsatzgetriebe selbst über eine einen Langenausgleich zulassende gelenkige Kupplung, wobei letztere in das Getriebegehäuse (241) einbezogen ist, dadurch gekennzeichnet, daS die getriebeseitige Kupplung von einem Tripode-Gelenk (42, 43) gebildet wird, dessen mit achsparallelen Bohrungen (431) für die darin geführten Rollen (421) des Innenteils (42) versehnes Außenteil (43) als mit dem auf der Radsatzwelle (23) sitzenden Großrad (24) in Zahneingriff stehendes Ritzel ausgebildet ist, und dessen Innenteil (42) mit den auf ihren Achsen (422) verlagerbaren Rollen (421) mit balliger Laufflache (423) drehfest auf der sich in das Außenteil (43) hinein erstreckenden Verbindungswelle (32) sitzt.

## Claims

1. Drive means for rail vehicles, having an electric hollow shaft motor (31), which is mounted on the vehicle or bogie frame (11) and has a hollow shaft (311), which extends parallel to the wheel shaft (23) resiliently mounted on the frame (11), the connection shaft (32) extending through the hollow shaft of said motor between the drive motor (31) and the wheel gear, said connection shaft being connected to the motor shaft (311) at the end remote from the wheel gear via a resilient coupling (41) and being connected to the wheel gear itself via a pivotal coupling, which permits a length adjustment and is built into the gear housing (241), characterised in that the coupling at the transmission end is formed by a tripod-like joint (42, 43), the external portion (43) of said joint being provided with axis-parallel bores (431) for the rollers (421) of the internal portion (42) guided therein and being configured as a pinion, which is in toothed engagement with the greater wheel (24) resting on the wheel shaft (23), and the internal portion (42) of said joint having the rollers (421), which are provided with a spherical running surface (423) and are displaceable along their axes (422), and resting non-rotatably on the connection shaft (32), which extends into the external portion (43).

## Revendications

1. Entraînement pour des véhicules sur rails comprenant un moteur électrique à arbre creux (31) monté sur le châssis (11) du véhicule ou sur un bogie, à travers l'arbre creux (311) duquel s'étend l'arbre de liaison (32) entre le moteur d'entraînement et le mécanisme d'entraînement de l'essieu et parallèlement à l'essieu (23) qui est monté élastiquement sur le châssis (11), arbre de liaison qui est relié à l'arbre moteur (311) par un accouplement élastique (41) sur le côté qui est à l'opposé du mécanisme d'entraînement de l'essieu, et au mécanisme d'entraînement de l'essieu lui-même par l'intermédiaire d'un accouplement articulé permettant un équilibrage de la longueur, cet accouplement étant incorporé dans le boîtier (241) du mécanisme d'entraînement, caractérisé en ce que l'accouplement sur le côté mécanisme d'entraînement est constitué par une articulation tripode (42, 43) dont la partie externe (43) est munie d'alésages (431) à axes parallèles destinés aux rouleaux (421) guidés à l'intérieur de la partie interne (42) et par le pignon qui est en prise avec la grande roue dentée (24) montée sur l'essieu (23), et dont la partie interne (42) est montée de façon fixe en rotation avec les rouleaux (421) qui peuvent se déplacer le long de leurs axes (422) et comportent une surface de roulement de forme arrondie (423) sur l'arbre de liaison (32) qui s'étend dans la partie externe (43).
